Europäisches Patentamt

European Patent Office

Office européen des brevets

(19)

(11) EP 0 849 054 A1

(12) EUROPÄISCHE PATENTANMELDUNG

(43) Veröffentlichungstag:
24.06.1998 Patentblatt 1998/26

(51) Int. Cl.⁶: **B25J 18/06**

(21) Anmeldenummer: 97118286.0

(22) Anmeldetag: 21.10.1997

(84) Benannte Vertragsstaaten:
AT BE CH DE DK ES FI FR GB GR IE IT LI LU MC
NL PT SE

(30) Priorität: 17.12.1996 DE 19652549

(71) Anmelder:
SIEMENS AKTIENGESELLSCHAFT
80333 München (DE)

(72) Erfinder:
• Berstecher, Ralph
  73230 Kirchheim (DE)
• Bauer, Jochen
  86150 Augsburg (DE)
• Feiten, Wendelin, Dr. rer.nat.
  85579 Neubiberg (DE)

(54) **Verfahren und Anordnung zur Konfigurationsbestimmung eines elastisch durch Zugstränge verformbaren Manipulators, der auf einer planaren Fläche operiert**

(57)    Mit der Erfindung wird ein durch Zugstränge betätigter elastischer Manipulator beschrieben, der auf eine Ebene operiert. Um einen solchen Manipulator beim Konsumentenprodukten kostengünstig einsetzen zu können, wird ein Modellierungsverfahren angegeben, welches den Manipulator in Form von Kreisbogensegmenten darstellt und was im Bereich eines Effektors einen Wegaufnehmer in Form einer Computermaus vorsieht. Die Bewegungssteuerung und Positionsermittlung des Manipulators erfolgt durch grobe Konfigurationsbestimmung mittels Kreisbogenmodellierung und durch verfeinerte Positionsmessung durch die Computermaus, wodurch exakte Positionierungen eines Effektors möglich sind. Weiterhin ist es vorgesehen die grobe Modellierung des Manipulators mit Hilfe eines Fuzzy-Korrekturreglers zu verfeinern, welcher beispielsweise am Realmanipulator gemessene Winkel in Form einer Look-up-Table bereithält und diese in Relation zu den eingestellten Zugstranglängen zur Verfügung stellt. Die Erfindung läßt sich vor allen Dingen bei Servicerobotern im Haushalts- und Bürobereich, insbesondere bei Reinigungs- oder Positionierungs- und Sortiermaschinen einsetzen.

FIG 3

EP 0 849 054 A1

## Beschreibung

Die Erfindung bezieht sich auf ein technisch einfach zu realisierendes Verfahren und eine Anordnung, mit der die Konfiguration eines flexiblen Manipulators bestimmt werden kann, um damit beispielsweise die Positionsveränderung eines an seiner Spitze angebrachten Effektors vorzugeben bzw. verfolgen zu können.

Mit dem zunehmenden Fortschreiten der Automatisierung in allen Lebensbereichen, steigt auch das Bedürfnis, im Konsumentenbereich technisch einfach zu realisierende Geräte für Verrichtungen, beispielsweise im Haushalt oder in Büroumgebungen, zur Verfügung zu haben. Im Haushalts- und Bürobereich sind beispielsweise einfache Serviceroboter vorstellbar, welche beispielsweise Post austragen oder Reinigungstätigkeiten durchführen, oder andere ähnlich gelagerte Verrichtungen ausüben. Um solche Geräte kostengünstig am Markt anbieten zu können, richtet sich das Augenmerk vor allen Dingen auf technisch einfach zu realisierende Geräte und deren Anbauteile. Ein Aspekt solcher Serviceroboter stellen beispielsweise die Manipulatoren dar, mit welchen sie ihre speziellen Arbeiten durchführen. Für die eingangs beschriebenen Tätigkeiten reicht es aus, daß solche Manipulatoren keine übermäßig großen Kräfte ausüben können. Es ist jedoch eine hohe Positioniergenauigkeit eines an der Spitze eines solchen Manipulators angebrachten Effektors von Nöten, damit er beispielsweise in Ecken staubsaugen, oder Post austragen, oder beispielsweise Getränke servieren kann.

Einfach zu realisierende Manipulatoren in Form von Schraubenfedern, an deren Umfang durch Ösen Zugstränge geführt sind, welche an einem Ende der Schraubenfeder befestigt sind und an deren anderem Ende frei austreten, sind bereits aus der europäischen Offenlegungsschrift 065 4326 bekannt. Dort beschriebene Manipulatoren können beispielsweise durch Ziehen einzelner oder mehrerer Zugstränge in eine beliebige Form gebracht, oder auch gestaucht werden. Einen Spezialfall dieser Manipulatoren stellen solche Manipulatoren dar, welche beispielsweise nur auf einer planaren Fläche operieren, wie dies beispielsweise beim Führen von Staubsaugerdüsen auf einer ebenen Fläche der Fall ist. Ebenso können auf diese Art und Weise Sortier- oder Ordnungsvorgänge auf einer Tischfläche durchgeführt werden.

Ein Problem besteht jedoch darin, einen solchartigen Manipulator so einfach zu modellieren, daß ein in einem Serviceroboter eingebauter Kleinrechner die Bewegungsvorgänge des Manipulators ohne die Lösung aufwendiger Differentialgleichungen steuern und koordinieren kann, damit Positionierungs- und Steuervorgänge in Echtzeit möglich sind. Bisher wurden zur Lösung dieser Problematik beispielsweise interne oder externe Sensoren vorgeschlagen, wie sie beispielsweise in der deutschen Patentanmeldung P 43 39 736.0 beschrieben sind. Für die geforderten Konsumentenanwendungen sind diese Anordnungen nach dem derzeitigen Stand immer noch sehr aufwendig, da insbesondere auf keine verfügbaren Lowcostkomponenten zurückgegriffen werden kann. Mit externen Sensoren kann beispielsweise der Endeffektor von außen mit Hilfe einer Videokamera oder mit Hilfe von Infrarotsensoren beobachtet werden, diese weisen jedoch neben ihren hohen Kosten das Problem auf, daß in beengten Umgebungen Hindernisse eine einwandfreie Beobachtung bzw. Messung der Endeffektorposition behindern können. Ein flexibler Manipulator, der auf einer ebenen Unterlage in zwei Dimensionen eingesetzt wird weist gegenüber allgemeinen dreidimensional operierenden Aktoren Besonderheiten auf, unter deren Zuhilfenahme sich das Modell eines solchen Manipulators einfacher gestalten läßt:

- Der Effektor befindet sich immer im direkten Kontakt mit der Unterlage, daher lassen sich die Positionsänderungen relativ zur Unterlage auf einfache Weise messen.
- In jedem beliebig gebogenen Zustand des Manipulators, selbst bei Anwesenheit von Hindernissen, kann dieser durch Ausnützung der Tatsache daß er mit der Ebene in Verbindung steht einfacher modelliert werden.
- Die Orientierung eines solchen Manipulators und des damit verbundenen Effektors hängt im wesentlichen von der Längendifferenz der Zugstränge ab, welche einer Steuerung eines solchen Manipulators bekannt ist und kann daher in einer Echtzeitregelschleife bestimmt werden.

Die der Erfindung zugrundeliegende Aufgabe besteht deshalb darin, ein Verfahren und eine Anordnung zur Konfigurationsbestimmung eines elastisch durch Zugstrenge verformbaren Manipulators, welcher auf einer planaren Fläche operiert, anzugeben, mit dem einfach und in Echtzeit die Position eines Effektors am Ende eines solchen Manipulators bestimmt und gesteuert werden kann.

Diese Aufgabe wird für das Verfahren gemäß den Merkmalen des Patentanspruches 1 und für die Anordnung gemäß den Merkmalen der Patentansprüche 10 bis 12 gelöst. Weiterbildungen der Erfindung ergeben sich aus den abhängigen Ansprüchen.

Ein besonderer Vorteil des erfindungsgemäßen Verfahrens ist, daß die Form des Manipulators durch Kreisbögen angenähert wird, so daß über die geometrischen Daten des Manipulators und die Differenz der Zugstranglängen, seine augenblickliche Form hinreichend genau und mathematisch einfach bestimmt werden kann.

Besonders einfach läßt sich die Konfiguration des Manipulators unter Zuhilfenahme des Öffnungswinkels der Kreisbogensegmente und der Kreisformeln für die Länge eines Umfangs eines Kreisbogensegmentes in Verbindung mit der Annahme, daß der Manipulator in seiner Kreislage aus zwei konzentrischen Kreisen gebildet wird, bestimmen.

Besonders vorteilhaft lassen sich Positionsveränderungen eines Effektors, welche an einem Ende des Manipulators angebracht ist dadurch bestimmen, daß in seinem Wirkbereich ein Relativpositionsaufnehmer vorgesehen ist, welcher die Bewegung des Effektors von einer Position zur anderen direkt mißt da die Positionsveränderung nicht modelliert werden muß, sondern direkt gemessen werden kann.

Besonders vorteilhaft werden als Relativpositionsaufnehmer zweiachsig wirkende Wegmeßaufnehmer vorgesehen, welche beispielsweise in Form von Computermäusen realisiert sind und deren Wegmessungen werden über Zuhilfenahme des Kreisbogensegmentöffnungswinkels $\beta$ in ein globales Koordinatensystem transformiert, das vorzugsweise in einem festen Ende des Manipulators verankert ist. Diese Transformation ist einfach berechenbar, da hierfür lediglich Winkelfunktionen eingesetzt werden müssen, welche das lokal durch eine Schwenkbewegung verdrehte Koordinatensystem des Relativbewegungsmeßaufnehmers in das globale, feste Koordinatensystem transformieren.

Besonders vorteilhaft läßt sich das lokale Koordinatensystem des Relativwegmeßaufnehmers in das globale Koordinatensystem transformieren, indem die Arcustangensfunktion des Kreisbogensegmentöffnungswinkels in Verbindung mit der Längendifferenz der Zugstränge angewendet wird. Dabei läßt sich die Transformation des lokalen Koordinatensystems in das globale Koordinatensystem vorteilhaft zeitdiskret durch die Aufsummierung einzelner Zeitwerte darstellen und muß nicht aufwendig durch Integration gelöst werden.

Besonders vorteilhaft werden in einem derartigen Verfahren die Konfiguration von schraubenfederartigen Manipulatoren bestimmt, da diese bereits aus dem Stand der Technik bekannt sind und somit einfach zu realisieren und schnell verfügbar sind.

Vorteilhaft lassen sich jedoch auch die Konfigurationen von Manipulatoren aus einem anderen Werkstoff wie beispielsweise Schaumgummi oder Gummi bestimmen.

Besonders vorteilhaft läßt sich das Modell zur Konfigurationsbestimmung eines solchen Manipulators verfeinern, indem in Abhängigkeit der Zugstranglängendifferenz und der damit bewirkten Krümmung des Aktors abhängig vom Betrag der Zugstranglängendifferenz immer größer werdende Korrekturwerte für den Öffnungswinkel des Kreisbogensegmentes angegeben werden, welche vorzugsweise an einem realen Manipulator einfach bestimmbar sind und in Form von beispielsweise Look-up-Tablen bereitgehalten werden können.

Besonders vorteilhaft sind bei einem solchen Manipulator und zur Steuerung des Manipulators als Wegmeßaufnehmer im Wirkbereich des Effektors rollende Kugeln mit xy-Wegaufnehmern vorgesehen, welche beispielsweise in Form von einer oder mehreren Computermäusen realisiert sein können, was den Vorteil hat daß diese am Markt weit verbreitet, technisch einfach sind und somit kostengünstig beschaffbar sind und auch eine hinreichende Genauigkeit für die Anwendung des erfindungsgemäßen Verfahrens aufweisen.

Besonders vorteilhaft läßt sich eine Steueranordnung für einen flexiblen Manipulator unter Anwendung des erfindungsgemäßen Verfahrens dadurch realisieren, daß ein Fuzzy-Regler eingesetzt wird, welcher in Abhängigkeit der Zugstranglängendifferenz einen Korrekturwert für den Öffnungswinkel des Kreisbogensegmentes angibt, da es sich bei diesen Korrekturwert um einen Wert handelt, der nicht linear von der Zugstranglängendifferenz abhängt und somit durch Anwendung unscharfer Regeln auf die Zugstranglängendifferenz gut bestimmt werden kann.

Im folgenden wird die Erfindung anhand von Figuren weiter erläutert

Figur 1     gibt als Beispiel einen Manipulator in Form einer Schraubenfeder in seiner Ruhelage an.

Figur 2     zeigt als Beispiel einen Manipulator in Schraubenform in gekrümmten Zustand.

Figur 3     zeigt ein einfaches Modell zur Konfigurationsbestimmung eines durch Zugstränge betätigten Manipulators.

Figur 4     veranschaulicht den Übergang vom lokalen zum globalen Koordinatensystem zu unterschiedlichen Zeitpunkten.

Figur 5     zeigt ein Beispiel einer Regelanordnung für die Bestimmung eines Korrekturwertes zur genaueren Modellbildung nach dem erfindungsgemäßen Verfahren.

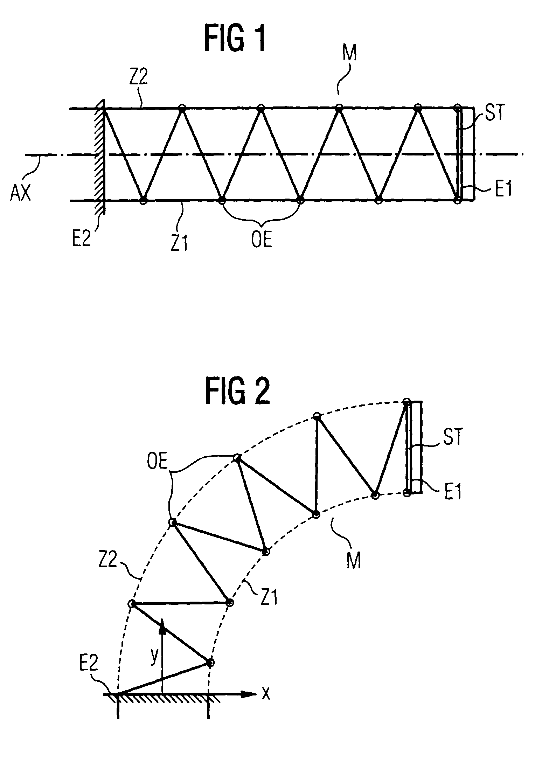

In Figur 1 ist ein einfacher Manipulator M in Form einer Schraubenfeder angegeben, welche an seinem Umfang Ösen OE aufweist, durch welche Zugstränge Z2 und Z1 geführt sind. Diese Zugstränge sind beispielsweise an einem ersten Ende E1 an einem Stahlring ST befestigt und treten an einem zweiten Ende E2 des Manipulators frei aus, so daß durch Zug und Freigeben der Zugstränge der Manipulator in eine beliebige Form gebracht werden kann. Der hier dargestellte Manipulator weist eine Symmetrieachse AX auf. Dem Fachmann wird bei Anwendung des erfindungsgemäßen Verfahrens und der zugrundeliegenden Prinzipien sofort klar, daß er auch Manipulatoren verwenden kann, welche nicht exakt symmetrisch sind. Auch ist klar, daß Manipulatoren verwendet werden können welche keine Schraubenfedern sind, sondern daß sich auch schaumgummiartige oder gummiartige oder andersartige elastische Manipulatoren für die Anwendung des erfindungsgemäßen Verfahrens eignen.

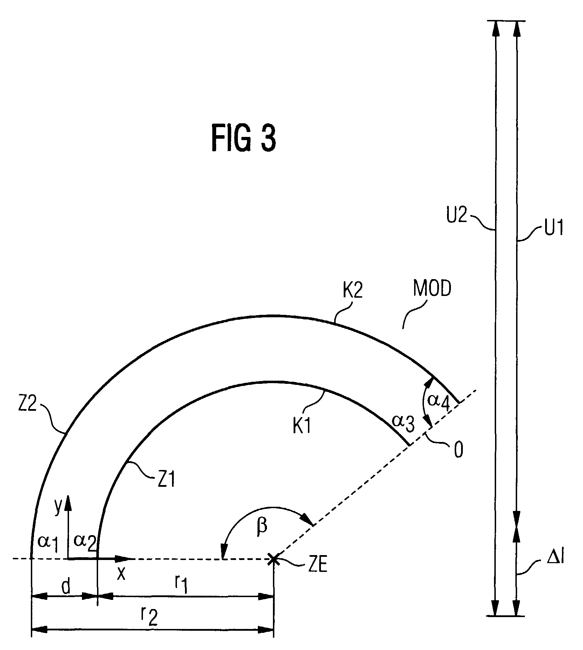

Wie Figur 2 zeigt wird beispielsweise durch Zug am Zugstrang Z1 der Manipulator M in eine gekrümmte Form gebracht. Da er in seinem Ende E2 beispielsweise fixiert ist biegt sich das Ende E1 in Richtung des gezogenen Zugstranges Z1. Nach dem erfindungsgemäßen Verfahren ist für die Konfiguration eines solchen Manipulators M auf einer Ebene maßgeblich die Differenz der Länge der beiden Zugstränge Z1 und Z2 verantwortlich. Auf diese Weise kann die Position vom Ende E1 des Manipulators mit hinreichender Genauigkeit bestimmt werden. Vorzugsweise ist wie Figur 2 weiter zeigt an dem fixen Ende des Manipulators E2 ein globales Koordinatensystem in x und y vorgesehen, mit welchem beispielsweise die Position eines am Ende E1 des Manipulators M vorgesehenen Effektors vorgegeben werden kann. Nach dem erfindungsgemäßen Verfahren kann die Steuerung eines solchen Manipulators seine augenblickliche Konfiguration feststellen und Positionsveränderungen des Effektors zum Verrichten von Tätigkeiten auf Basis des globalen Koordinatensystems vorgeben. Anhand der Funktionsweise des beschriebenen Manipulators ist leicht ersichtlich, daß die beste Bewegungswirkung durch die Zugstränge dann erreicht wird, wenn diese sich diametral gegenüberliegen, sowie parallel verlaufen und ebenfalls parallel zur Ebene verlaufen, auf welcher der Manipulator operieren soll. Die Anwendung des erfindungsgemäßen Verfahrens kommt jedoch nicht lediglich für solche Manipulatoren in Betracht, sondern vielmehr sind auch Manipulatoren denkbar, an denen die Zugstränge nicht exakt parallel geführt sind, oder welche einen anderen Abstand aufweisen als den Durchmesser des Manipulators. Auch ist es denkbar, daß die Zugstränge leicht schräg angeordnet sind und nicht direkt parallel zueinander verlaufen sondern aufeinander zulaufen oder voneinander weglaufen. Für die Anwendung des erfindungsgemäßen Verfahrens ist es lediglich wichtig, daß der Manipulator in Abhängigkeit ausgeübten Zuges auf einen oder beide Zugstränge Z1 und Z2 eine bogenförmige Konfiguration annimmt, welche durch Kreise modelliert werden kann und welche anschließend durch Korrekturfaktoren beispielsweise durch Anwendung von Fuzzy-Logik und Look-up-Tables korrigiert werden kann.

Wie Figur 3 zeigt kann das approximative Modell zur Konfigurationsbestimmung des Manipulators und damit zur Beschreibung der Lage des Manipulatorendes E1 unter der Hypothese ermittelt werden, daß die Federeinhüllende bei der Draufsicht durch konzentrische Kreisbögen dargestellt wird. Dies gilt analog für Manipulatoren, welche aus einem anderen Material aufgebaut sind. In dem Modell in Figur 3 kann beispielsweise im Punkt o ein Effektor vorgesehen sein. Weiterhin ist in Figur 3 der Mittelpunkt der beiden Kreisbögen K1 und K2, ZE dargestellt, sowie der Öffnungswinkel $\beta$ des Kreisbogensegmentes. Da die Modellierung nach dem erfindungsgemäßen Verfahren über die Längendifferenz der Zugstränge Z1 und Z2 erfolgen soll, ist vor allen Dingen deren Position und die Projektion der Zugstränge auf die planare Ebene, auf welche der Manipulator operiert für die Berechnungsgrundlage des Modells maßgeblich. Wie erkannt werden kann, weist der Kreisbogen K2 mit dem Radius r2 eine Zugstranglänge U2 auf, wohingegen der Kreisbogen K1 mit dem Radius r1 eine Zugstranglänge U1 aufweist. Die Differenz von U2 und U1 ist durch die Längendifferenz $\Delta l$ gegeben. Weiterhin ist in Figur 3 das globale Koordinatensystem xy dargestellt und ein Winkel $\alpha 4$, zwischen der einhüllenden also dem Kreisbogen K2 und der Begrenzungsfläche an der sich der Punkt O befindet. Nach dem erfindungsgemäßen Verfahren wird ein solcher Manipulator durch Kreisbogensegmente angenähert und durch folgende einfache Gleichungen modellierbar:

$$2\pi r_2 \frac{\beta}{2\pi} = r_2\beta = U2 \tag{1}$$

$$2\pi r_1 \frac{\beta}{2\pi} = r_1\beta = U1 \tag{2}$$

$$r_1 + d = r_2 \tag{3}$$

d bezeichnet hierin den Durchmesser des Manipulators bzw. den projizierten Abstand der beiden Zugstränge Z1 und Z2. Durch Umformung ergibt sich

$$r_1 = \frac{U1}{U2\text{-}U1}d \tag{4}$$

$$\beta = \frac{U2\text{-}U1}{d} = \frac{\Delta 1}{1} \tag{5}$$

Damit ergeben sich für den Punkt O die x/y-Koordinaten im globalen Koordinatensystem zu:

$$X = \frac{d}{2} + r_1(1\text{-}\cos\beta) + \frac{d}{2}\cos(\pi\text{-}\beta) \tag{6}$$
$$= \left(\frac{d}{2} + r_1\right)(1\text{-}\cos\beta)$$

$$y = r_1 \sin\beta + \frac{d}{2}\sin(\pi\text{-}\beta) \tag{7}$$
$$= \left(r_1\frac{d}{2}\right)\sin\beta$$

Mit U1 und U2 läßt sich somit der Winkel $\beta$ in folgender Form darstellen:

$$\beta = \arctan\frac{2xy}{y^2\text{-}x^2}, \qquad y>x>0, \tag{8}$$

$$\beta = \arctan\frac{2xy}{y^2\text{-}x^2} + \pi, \qquad x>y>0, \tag{9}$$

$$\beta = \arctan\frac{2xy}{y^2 \text{-} x^2}, \qquad y\text{-}x>0, \qquad (10)$$

$$\beta = \arctan\frac{2xy}{y^2 \text{-} x^2} \text{-} \pi, \qquad \text{-}x>y>0, \qquad (11)$$

Damit ergibt sich

$$U1 = \arctan\left(\frac{2xy}{y^2 \text{-} x^2}\right)\left(\frac{x^2+y^2}{2x} \text{-} \frac{d}{2}\right), \qquad x \neq 0 \quad (12)$$

$$U2 = \arctan\left(\frac{2xy}{y^2 \text{-} x^2}\right)\left(\frac{x^2+y^2}{2x} + \frac{d}{2}\right), \qquad x \neq 0 \quad (13)$$

$$U1=y, \ x=0, \qquad (14)$$

$$U2=y, \ x=0, \qquad (15)$$

Dies führt zur vektoriellen Schreibweise

$$\binom{U1}{U2} = \arctan\frac{2xy}{y^2 \text{-} x^2}\begin{pmatrix} \dfrac{x^2+y^2}{2x} \\ \dfrac{x^2+y^2+2dx}{2x} \end{pmatrix} \qquad (16)$$

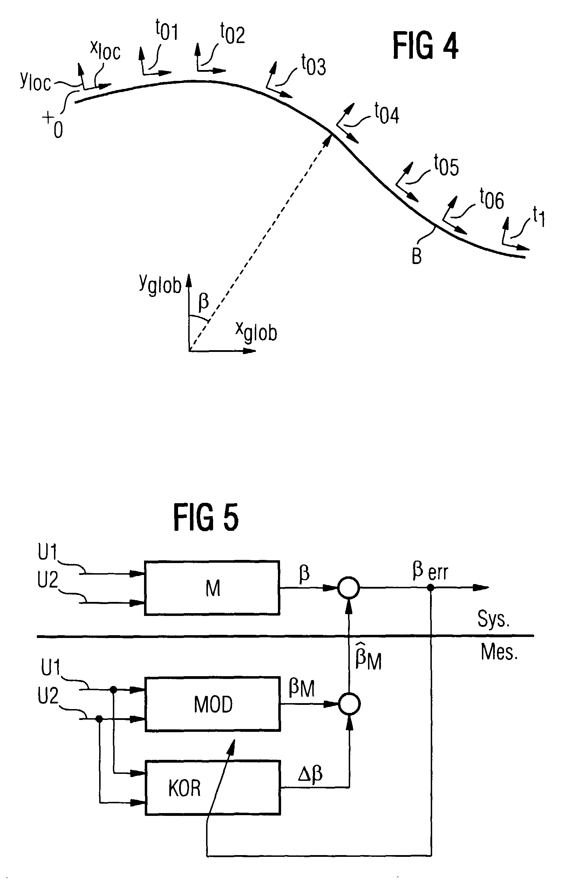

Wie aus Figur 4 erkannt werden kann, beschreibt ein Effektor, der an einem beweglichen Ende eines solchen Manipulators angebracht ist eine Bahn B. Gemäß der Erfindung ist es vorgesehen, beispielsweise einen Wegaufnehmer, der x/y-Koordinaten beispielsweise in Form einer Computermaus durch eine abrollende Kugel aufnimmt mit diesem Effektor mitzuführen und beim Abrollen auf der Unterlage d. h. auf der planaren Ebene, auf welcher der Manipulator operiert, Wegdaten als Relativdaten von einer Ausgangsposition zu einer Endposition des Effektors zu messen. Das Problem besteht dabei darin, daß die Wegdaten in einem lokalen Koordinatensystem des Effektors aufgenommen werden, daß jedoch eine Positionsverändervng des Effektors in einem globalen Koordinatensystem, welches vorzugsweise im Befestigungspunkt des Manipulators verankert ist, angegeben werden können muß. In Figur 4 sind diese beiden Koordinatensysteme dargestellt das Globale Koordinatensystem ist mit $y_{glob}$ und $x_{glob}$ und das lokale Koordinatensystem des Wegaufnehmers ist mit $y_{loc}$ und $x_{loc}$ bezeichnet. Wie aus dem Bahnverlauf B in Figur 4 erkannt werden kann, wird das lokale Koordinatensystem zwischen dem Zeitpunkt $t_0$ und dem Zeitpunkt $t_1$ über verschiedene Zwischenzustände $t_{01}$ bis $t_{06}$ in unterschiedliche Lagen verdreht. Dabei ist zu beachten, daß natürlich die Zwischenlagen zwischen den einzelnen dargestellten Zeitpunkten durch Interpolation der einzelnen Positionen ermittelt werden können.

nen. Gemäß der Erfindung ist es angedacht, über Winkelfunktionen und Anwendung des Winkels β, den das globale Koordinatensystem zum aktuellen Zeitpunkt mit dem lokalen Koordinatensystem bildet, die beiden Koordinatensysteme ineinander überzuführen, um eine exakte Wegmessung und Positionsverlagerungsbestimmung des Manipulators durchführen zu können, damit ein daran angebrachter Effektor exakt positionierbare Verrichtungen durchführen kann. Dabei läßt sich unter Anwendung des approximativen Modells des flexiblen Manipulators die Orientierung β des im Wirkbereich des Effektors angebrachten Wegmeßsensors durch:

$$\beta = \frac{U2\text{-}U1}{d} = \frac{\Delta1}{d} \qquad (25)$$

berechnen. Die Lage des Sensors in der Ebene wird dabei durch die drei Freiheitsgrade Lage x, y und seine Orientierung β festgelegt. Liefert der Wegmeßsensor z. B die Relativlage zu einer Anfangslage, so kann unter Beachtung des Winkels β daraus immer die Absolutlage ermittelt werden. Vorzugsweise geschieht dies mit

$$D_\beta = D_\beta(t) = \begin{pmatrix} \cos\beta(t) & \sin\beta(t) \\ \text{-}\sin\beta(t) & \cos\beta(t) \end{pmatrix} \qquad (26)$$

woraus man für zeitdiskrete Systeme

$$\binom{\Delta x_{glob}}{\Delta y_{glob}} = \sum_{k=0}^{N} D_\beta(t_0+kT)\binom{\Delta x_{lok}(t_0+kT)}{\Delta y_{lok}(t_0+kT)} \qquad (27)$$

mit der Anfangszeit $t_0$ und der Endzeit $t_1 = t_0 + NT$.

Als Meßwertaufnehmer für die Relativwegmessung können vorzugsweise Sensoren Einsatz finden, aus denen die Veränderung der Relativlage ermittelt werden kann. Bevorzugt sind solche Sensoren durch Computermäuse oder Relativgeschwindigkeitsmesser gegeben. Es sind jedoch auch optisch arbeitende Sensoren denkbar, wie sie beispielsweise auch für Computermäuse bekannt sind, welche auf Basis von Infrarotwellen funktionieren und deren Stereobasis praktisch durch zwei Infrarotgeber an den Oberkanten des Bildschirmes gegeben wird. Diese funktionieren nach Art des Radars wobei von den Infrarotgebern an Bildschirm Signale ausgesendet werden, welche von der Maus reflektiert werden wonach die Laufzeitunterschiede bestimmbar sind und damit die Position der Maus. Diese Aussage gilt analog für einen Reflektor, welcher beispielsweise im Bereich des Effektors angebracht ist und für am Befestigungspunkt des Manipulators vorgesehene Infrarotgeber. Optische Meßmittel weisen jedoch den Nachteil auf, daß damit nicht um Ecken herum gesehen werden kann.

Wie die Figur 5 zeigt, kann unter Anwendung eines Korrekturmodelles das reale Verhalten des Manipulators verbessert werden. Die mathematisch exakte, analytische Beschreibung eines Manipulators in Form einer Feder durch gekoppelte nicht lineare Differentialgleichungen erscheint für den Praxisfall und die Anwendung in einem Konsumentenprodukt für zu aufwendig. Die Lösung dieser Gleichungen ist unter Echtzeitbedingungen nur schwer möglich. Das erfindungsgemäße Ersatzmodell, daß die näherungsweise Beschreibung des Manipulatorverhaltens erlaubt, ist hierfür besser geeignet. Vorzugsweise kann um die Beschreibung des Manipulatorverhaltens zu verbessern Fuzzy-Control in Form eines additiven Korrekturmodelles, wie dies Figur 5 zeigt, eingesetzt werden. Das Korrekturmodell ist hier mit KOR bezeichnet. Vorzugsweise wird für den flexiblen Manipulator bewußt das makroskopische Modell für den Orientierungswinkel $\beta$ an der Spitze verwendet, weil dies einen ersten Aufschluß über den zu erwartenden Winkel gibt. Das Korrekturmodell kann dann, abhängig von der Reproduzierbarkeit und der geforderten Genauigkeit, die Winkelmessung verbessern. Durch die Erfindung wird also gezielt der Weg beschritten, die klassisch mathematisch exakte Beschreibungsmöglichkeit mit jener des Fuzzy-Controls zu verbinden, um möglichst das gesamte Wissen über das System verfügbar zu machen und zu einer einfachen Beschreibung des Systemverhaltens zu gelangen. Durch die erfindungsgemäß vorgesehene hybride Systemmodellierung kann ein erheblich einfacheres mathematisches Modell erhalten werden, welches unter Kombination mit Fuzzy-Control hinreichend verfeinert werden kann. Dies hat den Vorteil, daß sich die Modellierungsgenauigkeit durch die Vorgehensweise stark erhören läßt, wobei gleichzeitig die Anschaulichkeit gewahrt bleibt und die Berechnungskomplexität gering bleibt, was den Einsatz unter Echtzeitbedingungen ermöglicht.

Wie Figur 5 zeigt gibt es ein reales System und ein Meßsystem Sys und Mes, welche durch eine Gerade separiert werden. Dem realen Manipulator M werden Zugstranglängen U1 und U2 vorgegeben worauf er mit einem Winkel $\beta$ reagiert. Dem Meßsystem Mes werden ebenfalls diese Zugstranglängen vorgegeben und parallel einem Modell des Manipulators MOD und einem Korrekturmodell KOR zugeführt. Dieses Korrekturmodell, welches bevorzugt verwendet wird, kann hier vorzugsweise als Fuzzy-Korrekturmodell umgesetzt sein. Der Einsatz von Fuzzy-Control beim erfindungsgemäßen Modellierungsverfahren ermöglicht eine lokale Beschreibung des Korrekturterms und damit den gezielten Einsatz der Nichtlinearität. Daneben wird bevorzugt zwischen den Stützstellen interpoliert, so daß nur einige Meßpunkte aufgenommen werden müssen, um ein brauchbares Korrekturmodell zu erhalten. Das additive Korrekturmodell ist dabei bevorzugt von den beiden Zugstranglängen U1 und U2 abhängig und modelliert daraus den additiven Modellfehler $\Delta\beta$, um damit den Fehler $\beta_{err}$ des realen Manipulators M zu verkleinern. Der fallweise Einsatz dieses Korrekturmodells hängt dabei insbesondere von der Reproduzierbarkeit der Meßergebnisse in Bezug auf die Winkelgröße $\beta$, als auch von der gewünschten benötigten Genauigkeit beim eingesetzten Manipulator ab.

**Patentansprüche**

1. Verfahren zur Konfigurationsbestimmung eines elastisch durch Zugstränge verformbaren Manipulators, der auf einer planaren Fläche operiert,

    a) bei dem ein in seiner Längsrichtung im wesentlichen axialsymmetrischer Manipulator (M) aus mindestens einem elastisch verformbaren Material bewegt wird, indem mindestens einer von mindestens zwei entlang von ersten zueinander und zur Längsachse (AX) des Manipulators (M) im wesentlichen parallelen Achsen beweglich geführten und an einem ersten Ende des Manipulators befestigten Zugsträngen (Z1, Z2) gezogen und/oder freigegeben wird,
    b) bei dem die Konfiguration des Manipulators (M) bestimmt wird, indem im wesentlichen als Näherung von einer kreisbogenförmigen Verkrümmung des Manipulators ausgegangen wird, so daß mindestens ein erster und ein zweiter Zugstrang (Z1, Z2) bei gekrümmtem Manipulator (M) miteinander zwei konzentrisch angeordnete Kreisbögen (K1, K2) bilden, wobei deren Abstand d aus der Projektion der Zugstränge auf die planare Ebene ermittelt wird und die Kreisbogenlänge über die Länge des ersten U1 und zweiten U2 am Manipulator verlaufenden Zugstranges gemessen wird und deren Radien $r_1$ und $r_2$ aus bekannten Kreisfunktionen mit U1, U2 und d bestimmt werden.

2. Verfahren nach Anspruch 1, bei dem nach folgenden Formeln vorgegangen wird:

$$2\pi r_2 \frac{\beta}{2\pi} = r_2\beta = U2$$

$$2\pi r_1 \frac{\beta}{2\pi} = r_1\beta = U1,$$

$$r_1 + d = r_2$$

woraus sich

$$r_1 = \frac{U1}{U2\text{-}U1}d$$

und der Öffnungswinkel $\beta$ der Kreisbogen-

segmente zu

$$\beta = \frac{U2-U1}{d} = \frac{\Delta 1}{d}$$

ergibt.

3. Verfahren nach einem der vorangehenden Ansprüche, bei dem die Position und/oder die Positionsveränderung eines am ersten Ende des Manipulators angebrachten Effektors bestimmt wird, indem mit einem im Wirkbereich (o) des Effektors vorgesehenen Relataivbewegungsaufnehmer die Bewegung des Effektors auf der planaren Ebene gemessen wird, wobei die Position des Effektors aus der Konfiguration des Manipulators und den vom Relataivbewegungsaufnehmer gemessenen Wegdaten bestimmt wird.

4. Verfahren nach Anspruch 2 und 3,

a) bei dem der Manipulator an seinem zweiten Ende (E2) befestigt ist und dort ein globales Koordinatensystem ($x_{glob}$, $y_{glob}$) verankert ist, in dem Effektorpositionsveränderungen vorgegeben werden,
b) bei dem der Relataivbewegungsaufnehmer die Bewegung in mindestens zwei Achsen in einem lokalen Koordinatensystem ($x_{loc}$, $y_{loc}$) mißt,
c) und bei dem die globalen Koordinaten des Effektors, ausgehend von einer bekannten Ausgangskonfiguration des Manipulators, im globalen Koordinatensystem bestimmt werden, indem sukzessive bei der Bewegung des Effektors der Winkel $\beta$ bestimmt wird und mit diesem die in lokalen Koordinaten gemessenen Wegdaten des Relataivbewegungsaufnehmers über bekannte Winkelfunktionen in Wegdaten im globalen Koordinatensystem überführt werden

5. Verfahren nach Anspruch 4,

a) bei das globale Koordinatensystem auf der Symmetrieachse (AX) verankert ist,
b) bei dem die Ausgangskoordinaten des auf der Symmetrieachse befindlichen Effektors im globalen Koordinatensystem aus der Manipulatorkonfiguration zu:

$$x = \left(r_1 + \frac{d}{2}\right)(1-\cos\beta)$$

$$y = \left(r_1 + \frac{d}{2}\right)\sin\beta$$

bestimmt werden
c) und bei dem $\beta$ zu

$$\beta = \arctan\frac{2xy}{y^2-x^2} \qquad y>x>0 \text{ und } y>-x>0$$

$$\beta = \arctan\frac{2xy}{y^2-x^2} +\pi \qquad x>y>0$$

$$\beta = \arctan\frac{2xy}{y^2-x^2} -\pi \qquad -x>y>0$$

bestimmt wird.

6. Verfahren nach Anspruch 5
bei dem die Koordinaten des auf der Symmetrieachse befindlichen Effektors im globalen Koordinatensystem zeitdiskret zu

$$\begin{pmatrix}\Delta x_{glob} \\ \Delta y_{glob}\end{pmatrix} = \sum_{k=0}^{n} D_\beta(t_0+kT)\begin{pmatrix}\Delta x_{loc}(t_0+kT) \\ \Delta y_{loc}(t_0+kT)\end{pmatrix}$$

bestimmt wird mit

Index loc:       lokales Koordinatensystem
Index glob:      globales Koordinatensystem

7. Verfahren nach einem der vorangehenden Ansprüche, bei dem die Konfiguration eines Manipulators in Form einer Schraubenfeder bestimmt wird

8. Verfahren nach einem der Ansprüche 1 bis 6, bei dem die Konfiguration eines Manipulators in Form eines Schaumgummirohres bestimmt wird.

9. Verfahren nach einem der vorangehenden Ansprüche, bei dem in Abhängigkeit des Längenunterschiedes zwischen U1 und U2 mindestens ein Korrekturwert zur Korrektur der Näherung Manipulatorkonfiguration verwendet wird.

10. Anordnung zur Steuerung eines Manipulators nach einem Verfahren der vorangehenden Ansprüche, bei der ein Relataivbewegungsaufnehmer nach Art einer Computermaus vorgesehen ist.

11. Anordnung nach Anspruch 10 in Verbindung mit Anspruch 9, bei der ein Fuzzy-Regler (KOR) zur Korrektur des Winkels $\beta$ vorgesehen ist.

## FIG 1

## FIG 2

# FIG 3

## FIG 4

$t_{01}$  $t_{02}$

$x_{loc}$

$y_{loc}$

$t_{03}$

$+_0$

$t_{04}$

$t_{05}$

$t_{06}$  $t_1$

B

$y_{glob}$

$\beta$

$x_{glob}$

## FIG 5

U1

U2

M

$\beta$

$\beta_{err}$

Sys.

$\hat{\beta}_M$

Mes.

U1

U2

MOD

$\beta_M$

KOR

$\Delta\beta$

**Europäisches
Patentamt**

# EUROPÄISCHER RECHERCHENBERICHT

Nummer der Anmeldung

EP 97 11 8286

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 44 26 811 C (SIEMENS AG) <br> * Anspruch 1 * <br> ----- | 1 | B25J18/06 |

RECHERCHIERTE SACHGEBIETE (Int.Cl.6)

B25J
A47L

Der vorliegende Recherchenbericht wurde für alle Patentansprüche erstellt

| Recherchenort | Abschlußdatum der Recherche | Prüfer |
|---|---|---|
| DEN HAAG | 9.März 1998 | Lammineur, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                          
& : Mitglied der gleichen Patentfamilie, übereinstimmendes Dokument